# EUROPÄISCHE PATENTSCHRIFT

(11) **EP 0 800 618 B1**
(45) Veröffentlichungstag und Bekanntmachung des Hinweises auf die Patenterteilung: **29.12.1999**
(21) Anmeldenummer: 96945352.1
(22) Anmeldetag: 08.10.1996
(51) Int. Cl.: F01N 3/22, F01N 3/32

(54) **VERFAHREN ZUR ÜBERPRÜFUNG EINER SEKUNDÄRLUFTPUMPE**
METHOD OF MONITORING A SECONDARY AIR PUMP
PROCEDE POUR CONTROLER UNE POMPE A AIR SECONDAIRE

(30) Priorität: 26.10.1995 DE 19539938
(43) Veröffentlichungstag der Anmeldung: 15.10.1997
(73) Patentinhaber: SIEMENS AKTIENGESELLSCHAFT, 80333 München (DE)
(72) Erfinder: BAYERLE, Klaus, D-93051 Regensburg (DE); ANGERMAIER, Anton, D-84172 Thann (DE)
(86) Internationale Anmeldenummer: DE9601918
(87) Internationale Veröffentlichungsnummer: WO9715752

(56) Entgegenhaltungen:
- EP-A- 0 663 516
- DE-A- 4 120 891
- DE-A- 4 237 215
- US-A- 5 381 658
- PATENT ABSTRACTS OF JAPAN vol. 018, no. 432 (M-1654), 11.August 1994 & JP 06 129244 A (NISSAN MOTOR CO LTD), 10.Mai 1994,

## Beschreibung

Die Erfindung betrifft ein Verfahren zur Überprüfung einer Sekundärluftpumpe gemäß dem Oberbegriff des Anspruchs 1.

Aus der DE 41 20 891 A1 ist bereits ein Verfahren zur Überprüfung einer Sekundärluftpumpe bekannt, bei dem mit einem Druckfühler eine Soll-Leistung der Sekundärluftpumpe überprüft wird und bei einer Abweichung der Soll-Leistung von einer vorgegebenen Ist-Leistung Abhilfemaßnahmen durchgeführt werden. Die Ermittlung der Ist-Leistung mit einem Druckfühler ist relativ ungenau. Zudem wird keine Aussage über die Art der Fehlfunktion gemacht.

Die Aufgabe der Erfindung beruht darin, ein genaues Verfahren zur Überwachung der Sekundärlufteinblasung zur Verfügung zu stellen, das sicher eine Fehlfunktion der Sekundärlufteinblasung, insbesondere Undichtigkeiten in Luftleitungen erkennt.

Die US 5,381,658 zeigt eine Diagnoseeinrichtung mit der die Sekundärlufteinblasung einer Brennkraftmaschine auf Undichtheiten in der Luftleitung überwacht wird. Dabei wird anhand von Meßwerten, insbesondere der Luftzahl Lambda die tatsächliche Förderleistung der Sekundärluftpumpe im stationären Betrieb, das heißt bei Lambda = 1 berechnet und mit vorgegebenen Förderleistungsbereichen verglichen.

Vorteilhafte Ausbildungen und Verbesserungen der Erfindung sind in den Unteransprüchen angegeben.

Die Erfindung wird anhand der Figuren näher erläutert; es zeigen:
- Figur 1: eine schematische Anordnung zur Durchführung des Verfahrens und
- Figur 2: eine Kennlinie für die Sekundärluftmasse.

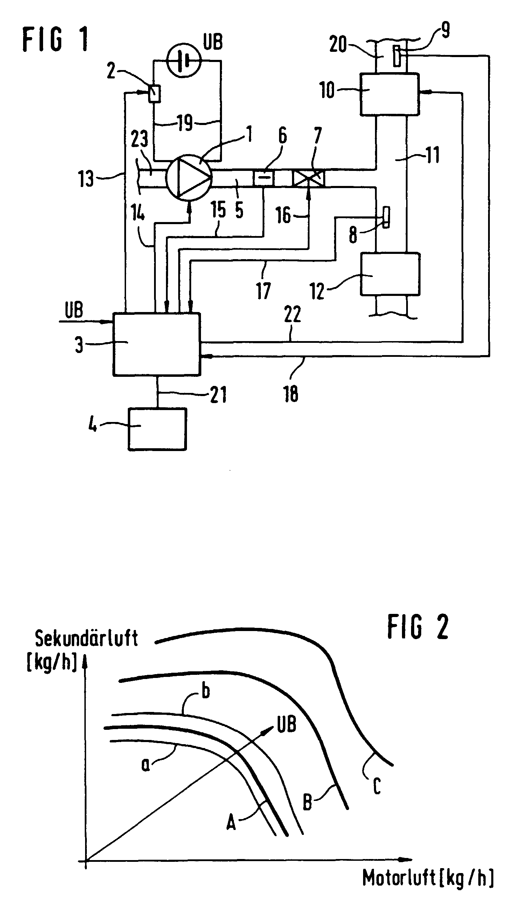

Figur 1 zeigt eine Sekundärluftpumpe 1, die über eine Luftleitung 5 mit einer Abgasleitung 11 einer Brennkraftmaschine 10 verbunden ist, an die ein Katalysator 12 angeschlossen ist. Die Sekundärluftpumpe 1 ist mit Spannungsleitungen 19 über das Relais 2 mit einer Versorgungsspannung UB und über eine erste Steuerleitung 14 mit einem Steuergerät 3 verbunden. Das Steuergerät 3 ist über eine zweite Steuerleitung 13 mit dem Relais 2, über eine Datenleitung 21 mit einem Spei cher 4 und über eine Daten- und Steuerleitung 22 mit der Brennkraftmaschine 10, insbesondere mit der Einspritzanlage der Brennkraftmaschine 10, verbunden.
Zudem ist an einem Eingang des Steuergerätes 3 die Versorgungsspannung UB geführt.

In der Luftleitung 5 ist ein Luftmassenmesser 6 angeordnet, der über eine erste Meßleitung 15 mit dem Steuergerät 3 verbunden ist. Zwischen dem Luftmassenmesser 6 und der Abgasleitung 11 ist in der Luftleitung 5 ein Ventil 7 eingebracht, das über eine Ventilsteuerleitung 16 mit dem Steuergerät 3 in Verbindung steht. Im Ansaugbereich 20 der Brennkraftmaschine 10 ist ein Motorluftmassensensor 9 eingebracht, der über eine dritte Meßleitung 18 an das Steuergerät 3 angeschlossen ist.

Zwischen der Brennkraftmaschine 10 und dem Katalysator 12 ist ein Abgasdrucksensor 8 in der Abgasleitung 11 eingebracht, der über eine zweite Meßleitung 17 an das Steuergerät 3 angeschlossen ist.

Die Anordnung nach Figur 1 funktioniert wie folgt: In einer einfachen Ausführung der Erfindung ist die Sekundärluftpumpe 1 so ausgebildet, daß die Sekundärluftpumpe 1 mit einer konstanten Drehzahl betrieben wird und über die zweite Steuerleitung 13 vom Steuergerät 3 ein- oder ausgeschaltet wird. Das Ventil 7 ist in der einfachen Ausführung als Ein-/Aus-Ventil ausgebildet, mit dem das Steuergerät 3 die Luftleitung 5 öffnen oder schließen kann.

In einer Weiterbildung der Erfindung ist die Drehzahl der Sekundärluftpumpe über die erste Steuerleitung 14 einstellbar. Das Steuergerät 3 steuert die Sekundärluftpumpe 1 in Abhängigkeit von der Motorluftmasse, die von dem Motorluftmassenmesser 9 ermittelt wird, oder in Abhängigkeit vom Abgasdruck der Abgasleitung, die vom Drucksensor 8 ermittelt wird, und in Abhängigkeit von weiteren Betriebsparametern wie der Einspritzmenge und einem Sollwert für das Abgasverhältnis von Sauerstoff zu Kraftstoff. Dazu greift das Steuergerät 3 auf Kennfelder zu, die im Speicher 4 abgelegt sind.

Für die Förderleistung der Sekundärluftpumpe 1, d.h. für die Sekundärluftmasse pro Zeiteinheit, ist im Speicher 4 ein Förderkennfeld abgelegt, das die Förderleistung in Abhängigkeit von der Versorgungsspannung und dem Abgasdruck oder von der Versorgungsspannung und der Motorluftmasse angibt. Das Förderkennfeld ist als eine Kennfläche abgelegt, wobei zulässige Abweichungen der Förderleistung zu gößeren und zu kleineren Förderleistungen für die verschiedenen Betriebspunkte angegeben sind, die im Rahmen der Streuung der Förderleistung der Sekundärluftpumpen liegen. Diese Werte werden z.B. vom Hersteller der Sekundärluftpumpe angegeben.

Eine weitere Form des Förderkennfeldes besteht darin, ein maximales und ein minimales Kennfeld für die Förderleistung in Abhängigkeit von der Versorgungsspannung und dem Abgasdruck oder von der Versorgungsspannung und der Motorluftmasse abzulegen, die eine maximal zulässige bzw. eine minimal zulässige Förderleistung für die Sekundärluftpumpe angeben.

Zur Überwachung der Funktionsweise der Sekundärluftpumpe 1 gibt der Luftmassenmesser 6 die gemessene Luftmasse pro Zeiteinheit an das Steuergerät 3 weiter. Das Steuergerät 3 vergleicht die gemessene Förderleistung mit der im Förderkennfeld abgelegten Förderleistung, den die Sekundärluftpumpe 1 entsprechend der Steuerung durch das Steuergerät 3 und der an der Sekundärluftpumpe 1 anliegenden Spannung und dem herrschenden Abgasdruck fördern müßte.

Weicht die Förderleistung mehr von dem Förderkennfeld ab, als durch die zulässigen Abweichungen angegeben ist, oder liegt die Förderleistung außerhalb des Förderleistungsbereiches, der durch das minimale und das maximale Kennfeld vorgegeben ist, so wird eine Fehlfunktion erkannt.

Die gemessene Förderleistung wird mit dem Förderkennfeld bei quasistationären Last- und Drehzahlbereichen der Brennkraftmaschine 10 verglichen. Quasistationäre Last- und Drehzahlbereiche werden dadurch erkannt, daß die zeitliche Änderung der Last oder der Drehzal vorgegebene Werte nicht überschreitet.

Ein einfaches Meßverfahren besteht darin, die Überprüfung der Förderleistung in vorgegebenen Zeitabständen, insbesondere alle 500 msek, durchzuführen. Die Überprüfung wird jedoch nur in quasistationären Last- und Drehzahlbereichen durchgeführt. Erkennt das Steuergerät 3, daß ein instationärer, d.h. ein nicht quasistationärer, Betriebszustand vorliegt, so wird die nächste Überprüfung erst nach einer vorgegebenen Zeitdauer, beispielsweise nach einer Sekunde, wieder durchgeführt.

Eine Art der Auswertung der Überprüfung besteht darin, die Anzahl der durchgeführten Überprüfungen für die Betriebsdauer der Sekundärluftpumpe zu zählen und die Anzahl der Überprüfungen, die eine Fehlfunktion der Sekundärluftpunpe zeigen, ebenfalls zu zählen, und eine Fehlfunktion zu erkennen, wenn die Anzahl der Fehlfunktionen größer als 20% der Anzahl der Überprüfungen ist, wobei die Anzahl der Überprüfungen eine Mindestanzahl von 100 überschreiten muß.

Eine genaue Auswertung der Fehlfunktion wird ereicht, wenn für ein Überschreiten der zulässigen Förderleistung ein erster Zähler und für ein Unterschreitung der zulässigen Förderleistung ein zweiter Zähler hochgezählt wird. Zur Erkennung einer zu hohen Förderleistung oder einer zu niedrigen Förderleistung werden der erste Zähler und der zweite Zähler mit der insgesamt durchgeführten Anzahl von Überprüfungen verglichen und eine zu große oder eine zu kleine Förderleistung erkannt, wenn der erste bzw. der zweite Zähler eine vorgegebene Anzahl von beispielsweise 20% der durchgeführten Überprüfungen überschreitet.

Anhand der Überprüfung der Sekundärluftpumpe 1 werden auch Undichtigkeiten in der Luftleitung 5 erkannt. Ergibt die Überprüfung der Sekundärluftpumpe 1 zum Beispiel, daß die Sekundärluftpumpe 1 mehr Sekundärluftmasse fördert, als auf Grund der Motorluftmasse oder des Abgasdruckes zulässig ist, so ist damit eine Undichtigkeit in der Luftleitung 5 nach dem Luftmassenmesser 5 erkannt.

Ergibt die Überprüfung der Sekundärluftpumpe 1, daß die Sekundärluftpumpe 1 weniger Luftmasse fördert, als von dem Steuergerät 3 eingestellt ist, so deutet dies auf eine Fehlfunktion der Sekundärluftpumpe 1 oder auf eine verstopfte Luftleitung 5 oder eine Undichtigkeit vor dem Luftmassenmesser 5 hin.

Eine bevorzugte Ausführungsform besteht darin, den Luftmassenmesser 5 vor der Sekundärluftpumpe 1 im Ansaugbereich 23 anzuordnen. Dies bietet den Vorteil, daß der Luftmassenmesser 5 keinen Druckschwankungen ausgesetzt ist und nicht durch Öl oder Kraftsoff verschmutzt wird.

Figur 2 zeigt ein Förderkennfeld, das die Förderleistung in Abhängigkeit von der Versorgungsspannung UB und von der Motorluftmasse wiedergibt, die eine Funktion des Abgasdruckes ist. Dabei sind der einfacheren Darstellungsweise explizit in Figur 2 nur drei Kennlinien A,B,C dargestellt, die drei verschiedenen und konstanten Versorgungsspannungen UB entsprechen. So gibt die Kennlinie A die Sekundärluft in Abhängigkeit von der Motorluftmasse für eine Spannung von 11 Volt und die Kennlinie B die Sekundärluft für eine Spannung von 12 Volt an. Über und unter der Kennlinie A ist eine erste Toleranzkennlinie b bzw. eine zweite Toleranzkennlinie a dargestellt, die den Bereich der Förderleistung angeben, innerhalb dessen die Förderleistung als in Ordnung erkannt wird. Die erste und die zweite Toleranzkennlinie a,b sind für die Versorgungsspannung von 11 Volt entsprechend der Kennlinie A angegeben.

## Patentansprüche

1. Verfahren zur Überwachung der Sekundärlufteinblasung mit einer Sekundärluftpumpe (1), die über eine Luftleitung (5) mit einer Abgasleitung (11) einer Brennkraftmaschine (10) verbunden ist, an die ein Katalysator (12) angeschlossen ist, wobei die Förderleistung der Sekundärluftpumpe (1) vorgegeben wird, die tatsächliche Förderleistung der Sekundärluftpumpe (1) gemessen wird und die gemessene Förderleistung mit der vorgegebenen Förderleistung verglichen wird,
**dadurch gekennzeichnet**, daß in der Luftleitung (5) ein Luftmassenmesser (6) angeordnet ist und das Ausgangssignal des Luftmassenmessers (1) zur Überwachung der Sekundärluftüberlassung herangezogen wird,
daß eine Undichtigkeit in der Luftleitung (5) erkannt wird, wenn die geförderte Förderleistung von der vorgegebenen Förderleistung abweicht, die aufgrund des Abgasdruckes, der in der Abgasleitung (11) herrscht, zulässig ist.

2. Verfahren nach Anspruch 1, dadurch gekennzeichnet, daß die vorgegebene Förderleistung von der Motorluftmasse, die von der Brennkraftmaschine (10) angesaugt wird, oder von dem Abgasdruck, der in der Abgasleitung (11) herrscht, abhängt.

3. Verfahren nach Anspruch 1,dadurch gekennzeichnet, daß eine Undichtigkeit in der Luftleitung (5) vor dem Luftmassenmesser (6) erkannt wird, wenn die Sekundärluftpumpe (1) weniger Sekundärluftmasse fördert, als aufgrund der Motorluftmasse oder des Abgasdruckes zulässig ist.

4. Verfahren nach Anspruch 1, dadurch gekennzeichnet, daß eine Undichtigkeit in der Luftleitung (5) nach dem Luftmassenmesser (6) erkannt wird, wenn die Sekundärluftpumpe (1) mehr Sekundärluftmasse fördert, als aufgrund der Motorluftmasse oder des Abgasdruckes zulässig ist.

5. Verfahren nach Anspruch 1, dadurch gekennzeichnet, daß die Förderleistung mit einem zulässigen Bereich der Förderleistung verglichen wird, und daß eine Fehlfunktion erkannt wird, wenn die Förderleistung von dem zulässigen Bereich abweicht.

6. Verfahren nach Anspruch 1, dadurch gekennzeichnet,daß der Vergleich bei quasistationären Betriebszuständen einer Brennkraftmaschine durchgeführt wird.

7. Verfahr-en nach Anspruch 1, dadurch gekennzeichnet, daß der Vergleich in festgelegten Zeitabständen durchgeführt wird.

8. Verfahren nach Anspruch 1, dadurch gekennzeichnet, daß der Vergleich für einen vorgegebenen Zeitraum nicht durchgeführt wird, wenn ein instationärer Betriebszustand einer Brennkraftmaschine erkannt wird.

9. Verfahren nach Anspruch 1, dadurch gekennzeichnet, daß eine Fehlfunktion erkannt wird, wenn die Anzahl der durchgeführten Vergleiche über einer vorgegebenen Anzahl liegt, und wenn die Anzahl der Vergleiche, die eine unzulässige Förderleistung nachweisen, einen vorgegebenen Anteil der Anzahl der durchgeführten Vergleiche überschreitet.

## Claims

1. A method for monitoring secondary air injection by means of a secondary air pump (1) connected via an air line (5) to an exhaust line (11) of an internal combustion engine (10) to which a catalytic converter (12) is connected, wherein a target value for the output of the secondary air pump (1) is set, the actual output of the secondary air pump (1) is measured and the measured output is compared with the target output,
**characterised in** that an air-mass meter (6) is located in the air line (5) and the output signal of the air-mass meter (1) is utilised for monitoring the secondary air transfer, and
that a leak in the air line (5) is identified by the delivered pump output deviating from the target output permitted on the basis of the exhaust gas pressure existing in the exhaust line (11).

2. Method according to Claim 1, characterised in that the target output is dependent on the engine air mass which is drawn in by the internal combustion engine (10), or on the exhaust gas pressure existing in the exhaust line (11).

3. Method according to Claim 1, characterised in that a leak in the air line (5) before the air-mass meter (6) is identified by the secondary air pump (1) delivering a secondary air mass less than is permitted on the basis of the engine air mass or of the exhaust gas pressure.

4. Method according to Claim 1, characterised in that a leak in the air line (5) after the air-mass meter (6) is identified by the secondary air pump (1) delivering a secondary air mass greater than is permitted on the basis of the engine air mass or of the exhaust gas pressure.

5. Method according to Claim 1, characterised in that the pump output is compared with a permitted range of pump outputs and that malfunctioning is identified by the pump output deviating from the permitted range.

6. Method according to Claim 1, characterised in that the comparison is carried out at quasi-stationary operating conditions of an internal combustion engine.

7. Method according to Claim 1, characterised in that the comparison is carried out at specified time intervals.

8. Method according to Claim 1, characterised in that the comparison for a specified time interval is not carried out if a non-stationary operating state of the internal combustion engine is detected.

9. Method according to Claim 1, characterised in that malfunctioning is identified by the number of comparisons carried out being above a specified number and by the number of comparisons indicating a non-permitted pump output exceeding a specified proportion of the number of comparisons carried out.

## Revendications

1. Procédé de contrôle de l'insufflation d'air secondaire avec une pompe à air secondaire (1), reliée par une canalisation d'air (5) à une canalisation de gaz d'échappement (11) d'un moteur à combustion interne (10), auquel est raccordé un catalyseur (12), dans lequel le débit de la pompe à air secondaire (1) est donné, le débit réel de la pompe à air secondaire (1) est mesuré et le débit mesuré est comparé au débit donné,
caractérisé en ce que, dans la canalisation d'air (5), est placé un débitmètre massique (6) et le signal de sortie du débitmètre massique (6) est utilisé pour le contrôle de la transmission d'air secondaire,
en ce qu'un défaut d'étanchéité dans la canalisation d'air (5) est reconnu si le débit transporté s'écarte du débit donné qui est admissible en vertu de la pression des gaz d'échappement qui règne dans la canalisation de gaz d'échappement (11).

2. Procédé selon la revendication 1, caractérisé en ce que le débit donné dépend de la masse d'air du moteur qui est aspirée par le moteur à combustion interne (10) ou de la pression des gaz d'échappement qui règne dans la canalisation de gaz d'échappement (11).

3. Procédé selon la revendication 1, caractérisé en ce qu'un défaut d'étanchéité dans la canalisation d'air (5) avant le débitmètre massique (6) est reconnu si la pompe à air secondaire (1) débite moins de masse d'air secondaire que ce qui est admissible en vertu de la masse d'air du moteur ou de la pression des gaz d'échappement.

4. Procédé selon la revendication 1, caractérisé en ce qu'un défaut d'étanchéité dans la canalisation d'air (5) après le débitmètre massique (6) est reconnu si la pompe à air secondaire (1) débite plus de masse d'air secondaire que ce qui est admissible en vertu de la masse d'air du moteur ou de la pression des gaz d'échappement.

5. Procédé selon la revendication 1, caractérisé en ce que le débit est comparé à une plage admissible du débit et en ce qu'un mauvais fonctionnement est reconnu si le débit s'écarte de la plage admissible.

6. Procédé selon la revendication 1, caractérisé en ce que la comparaison est effectuée pour des états de fonctionnement quasi stationnaires d'un moteur à combustion interne.

7. Procédé selon la revendication 1, caractérisé en ce que la comparaison est effectuée à des intervalles de temps déterminés.

8. Procédé selon la revendication 1, caractérisé en ce que la comparaison n'est pas effectuée pendant un temps donné si on constate un état de fonctionnement non stationnaire d'un moteur à combustion interne.

9. Procédé selon la revendication 1, caractérisé en ce qu'un mauvais fonctionnement est reconnu si le nombre des comparaisons effectuées est supérieur à un nombre donné, et si le nombre des comparaisons qui prouvent un débit inadmissible dépasse une portion donnée du nombre des comparaisons effectuées.
